# FASCICULE DE BREVET EUROPEEN

(11) **EP 3 489 609 B1**
(45) Date de publication et mention de la délivrance du brevet: **21.04.2021**
(21) Numéro de dépôt: 18208765.0
(22) Date de dépôt: 28.11.2018
(51) Int. Cl.: F28D 20/02

(54) **SYSTÈME DE STOCKAGE THERMIQUE (SST) PAR MATÉRIAUX À CHANGEMENT DE PHASE (MCP) COMPRENANT UN DISPOSITIF DE CONTRÔLE DE LA CRISTALLISATION**
WÄRMESPEICHERSYSTEM ANHAND VON PHASENWECHSELMATERIALIEN (PCM), DAS EINE VORRICHTUNG ZUR KONTROLLE DER KRISTALLISIERUNG UMFASST
THERMAL STORAGE SYSTEM (TSS) BY PHASE CHANGE MATERIALS (PCM) COMPRISING A DEVICE FOR CONTROLLING CRYSTALLISATION

(30) Priorité: 28.11.2017 FR 1761307
(43) Date de publication de la demande: 29.05.2019
(73) Titulaire: Commissariat à l'Energie Atomique et aux Energies Alternatives, 75015 Paris (FR)
(72) Inventeur: VESIN, Sébastien, 38100 GRENOBLE (FR)
(74) Mandataire: Brizio Delaporte, Allison

(56) Documents cités:
- WO-A1-2015/140297
- JP-A- 2000 038 577
- US-A1- 2015 345 874

## Description

### DOMAINE TECHNIQUE DE L'INVENTION

La présente invention concerne les Systèmes de Stockage Thermique (SST) par Matériaux à Changement de Phase (MCP), et plus particulièrement, comprenant un dispositif de contrôle de la cristallisation du MCP.

La présente invention concerne plus particulièrement un SST par MCP comprenant une cuve destinée à contenir un MCP et éventuellement un ciel de gaz au-dessus du MCP, et au moins un dispositif de contrôle de la cristallisation du MCP.

Tous les SST dont le MCP présente des problématiques de surfusion et de vitesse de cristallisation lente sont susceptibles d'être concernés par l'invention.

La présente invention trouvera son application dans les réseaux de chaleur et/ou de froid, urbains, ruraux ou industriels, ainsi que dans le stockage de l'énergie solaire. L'invention pourra également trouver des applications dans l'habitat, le transport thermique hors réseaux (camions, bateaux...) et le management thermique de systèmes embarqués.

### ÉTAT DE LA TECHNIQUE

Le stockage de chaleur exploitant la chaleur latente de matériaux à changement de phase (MCP), offre l'avantage d'une densité énergétique de stockage élevée (pouvant dépasser 100 kWh/m³) et la possibilité de stocker de la chaleur à haute température en limitant les considérations de tenue à la pression du système (contrairement par exemple aux systèmes de stockage de chaleur en eau pressurisée surchauffée).

Les MCP considérés sont généralement des paraffines, des sels fondus, des sels hydratés ou des eutectiques, qui présentent souvent comme désavantages soit une faible enthalpie de changement d'état (≤170 kJ/kg), soit une toxicité/nocivité pour l'homme ou pour l'environnement, soit une forte corrosivité, soit des propensions à la ségrégation ou à la non-congruence. Ces inconvénients rendent en l'état leur développement à grande échelle difficilement envisageable et présentent un premier frein au déploiement et à l'exploitation de ces stockages sur des réseaux de chaleur urbains ou industriels.

En réponse à cette problématique, une solution est d'utiliser les polyols ou sucres alcooliques comme MCP. Outre une bonne, voire très bonne enthalpie de changement d'état (de 200 à 340 kJ/kg, contribuant à la densité énergétique de stockage), ces MCP présentent également de nombreux avantages puisqu'ils sont biosourcés, alimentaires donc non toxiques, non corrosifs, accessibles et bio dégradables. Toutefois, il a été observé que certains matériaux de cette famille présentent une forte propension à la surfusion c'est-à-dire la capacité d'un matériau à rester à l'état liquide lorsque sa température interne est inférieure à sa température de cristallisation, ce qui constitue un inconvénient très pénalisant, expliquant en partie pourquoi leur mise en oeuvre est toujours au niveau de R&D. La conséquence de cet inconvénient s'observe lors de la phase de décharge du système de stockage, étape au cours de laquelle la cristallisation du MCP est déclenchée pour permettre la restitution de la chaleur stockée par le MCP sous forme latente. Or dans les faits, la forte propension à la surfusion caractéristique des polyols utilisés comme MCP rend cette phase difficilement maitrisable et pose donc une vraie problématique pour leur exploitation.

Dans le cadre du projet de recherche Européen SAM.SSA pour "Sugar Alcohol based Materials for Seasonal Storage Applications", différentes voies pour maitriser la cristallisation de ces types de MCP ont été revues.

Certains MCP utilisés pour des applications de stockage de chaleur sont additivés de façon à surmonter certains de leur défaut ou inconvénient (surfusion, non-congruence, vieillissement...). Cette méthode simplifie la mise en oeuvre de ces MCP et conduit même dans certaines situations à permettre tout simplement leur utilisation. Dans le cadre des sucres alcooliques utilisés comme MCP, l'article « The effect of additives on the speed of the crystallization front of Xylitol with various degrees of supercooling » Ari Seppala & al. Helsinki University of Technology, décrit l'étude de l'addition de solvant dans un MCP sur la vitesse de cristallisation du MCP. Le MCP solide est mélangé avec le solvant puis le mélange est mis à chauffer jusqu'à ce que la température de fusion du MCP soit atteinte. Le mélange est ensuite mis à refroidir à température ambiante et la vitesse de cristallisation est suivie. Des résultats obtenus montrent une accélération de la vitesse de cristallisation toutefois, celle-ci reste encore très faible et aucune étude sur du long terme, sur des grands volumes et intégrant des fonctionnements en cycles, caractéristiques du stockage de chaleur, ne permettent d'envisager sereinement cette voie pour le moment.

Le bullage obtenu par l'injection de gaz, notamment de l'air, directement dans le MCP, produit une agitation et des contraintes de cisaillement qui conduisent à la cristallisation du MCP. Cette méthode pour déclencher la cristallisation du sucre alcoolique utilisé comme MCP a été confirmée lors d'essais menés par l'équipe du projet SAM.SSA,

Les expérimentations suivant cette méthode menées dans le cadre du projet SAM.SSA ont confirmé son efficacité, mais ont également mis en évidence un temps de latence de l'ordre de 30 minutes entre le début du bullage et le début de la cristallisation. US 2015/345874 divulgue un SST selon le préambule de la revendication 1.

Tout l'enjeu pour envisager le développement et l'exploitation future de ces stockages exploitant les sucres alcooliques comme MCP, repose donc sur la possibilité d'améliorer le contrôle de cristallisation.

### RÉSUMÉ DE L'INVENTION

Pour atteindre cet objectif, un aspect de la présente invention concerne un Système de Stockage Thermique (SST) par Matériau à Changement de Phase (MCP) comprenant une cuve destinée à contenir un MCP, et un système de circulation destiné à la circulation d'un solvant dans la cuve au contact direct du MCP caractérisé en ce que le SST comprend avantageusement, un dispositif de contrôle de la cristallisation du MCP comprenant :
- un premier module d'injection configuré pour injecter, en partie inférieure de la cuve dans le MCP, un solvant diphasique, liquide/gaz, à l'état liquide dans lequel le MCP est insoluble, et
- un premier module d'évacuation configuré pour évacuer le solvant diphasique à l'état gazeux en partie supérieure de la cuve, opposée à l'extrémité inférieure, et avantageusement
- un deuxième module d'injection configuré pour injecter en partie inférieure de la cuve, le solvant surchauffé à l'état gazeux au contact direct du MCP, et
- un deuxième module d'évacuation configuré pour évacuer le solvant diphasique à l'état liquide en partie supérieure de la cuve, opposée à la partie inférieure.

Le SST selon l'invention comprend un échangeur thermique externe destiné à transférer l'énergie thermique entre le solvant et un fluide caloporteur issu d'un réseau externe de circulation du fluide caloporteur. L'échangeur est configuré pour préférentiellement alternativement condenser le solvant gazeux évacué de la cuve par le premier module d'évacuation pour qu'il soit préférentiellement réinjecté à l'état liquide dans la cuve par le premier module d'injection, ou évaporer le solvant liquide préférentiellement contenu dans un réservoir, pour qu'il soit injecté préférentiellement dans la cuve, à l'état de vapeur surchauffée par le deuxième module d'injection.

L'échangeur thermique est destiné à transférer l'énergie thermique entre le solvant et un fluide caloporteur issu d'un réseau externe de circulation du fluide caloporteur.

Dans cette nouvelle conception d'un SST, le solvant fonctionne en diphasique liquide/gaz et est à la fois utilisé comme fluide caloporteur à contact direct avec le MCP et également comme moyen très performant pour amorcer et accélérer la cristallisation du MCP grâce à l'agitation générée par son évaporation spontanée dans ce dernier. Le transfert de chaleur entre le solvant et le fluide caloporteur du réseau de chaleur sur lequel est avantageusement déployé le SST est préférentiellement assuré par un échangeur thermique externe, fonctionnant avec le solvant soit en évaporateur soit en condenseur, suivant les phases de charge ou de décharge du SST.

Le système de circulation du solvant permet de faire pénétrer à l'intérieur de la cuve et donc dans le MCP, le solvant directement au contact du MCP. Le solvant est diphasique de sorte à changer d'état, avantageusement de manière spontanée, au contact du MCP ayant emmagasiné de la chaleur ; le solvant est choisi pour que le MCP n'y soit pas soluble de sorte à générer des sites de nucléations pour accélérer la vitesse de cristallisation.

De cette manière, l'addition de solvant diphasique dans le MCP contribue à modifier favorablement les propriétés du MCP et donc accélérer la vitesse de cristallisation tout en permettant le chauffage du solvant introduit au contact du MCP. Le chauffage du solvant entraine son ébullition générant un bullage du solvant dans le MCP déclenchant ainsi la cristallisation du MCP.

Le solvant est utilisé comme fluide caloporteur en contact direct avec le MCP, en décharge le MCP cède sa chaleur au solvant à l'état liquide entrainant la cristallisation du MCP, en charge le solvant à l'état gazeux cède sa chaleur au MCP entrainant la fusion du MCP. L'énergie thermique récupérée ou cédée par le solvant est transférée au niveau d'un échangeur thermique externe avec le fluide caloporteur du réseau externe.

L'injection du solvant diphasique dans lequel le MCP est non miscible permet donc de manière efficace de contrôler la cristallisation du MCP et notamment le déclenchement et la vitesse de cristallisation.

Le solvant à l'état gazeux est évacué par un premier module d'évacuation pour limiter l'augmentation de la pression dans la cuve et permettre le recyclage du solvant.

L'externalisation de l'échangeur thermique du SST par MCP permet l'utilisation d'échangeurs thermiques plus classiques, moins coûteux et éventuellement disponibles sur le marché. Cela permet de réduire considérablement le coût d'un SST, l'échangeur thermique interne d'un MCP correspond à 40 à 50% du coût total.

Un autre aspect de la présente invention concerne un procédé de contrôle de la cristallisation d'un MCP, contenu dans la cuve d'un SST par l'injection d'un solvant, diphasique, liquide/gaz, dans lequel le MCP est insoluble, à l'état liquide, en partie inférieure de la cuve et l'évacuation du solvant à l'état gazeux en partie supérieure de la cuve.

L'injection d'un solvant dans le MCP va accélérer la vitesse de cristallisation du MCP, de plus le changement d'état du solvant de l'état liquide à l'état gazeux génère une agitation mécanique et un bullage propice à déclencher la cristallisation.

Un autre aspect de la présente invention concerne un procédé de stockage et de déstockage d'énergie thermique par un SST tel que décrit ci-dessus comprenant une phase de charge au cours de laquelle le fluide caloporteur cède sa chaleur à un MCP contenu dans une cuve entrainant la fusion du MCP et comprenant l'injection d'un solvant diphasique liquide/gaz, à l'état de vapeur surchauffée, dans lequel le MCP est insoluble, en partie inférieure de la cuve directement au contact du MCP, et avantageusement l'évacuation du solvant à l'état liquide en partie supérieure de la cuve et une phase de décharge au cours de laquelle le MCP cède sa chaleur au fluide caloporteur entrainant la cristallisation du MCP et comprenant l'injection d'un solvant diphasique liquide/gaz à l'état liquide, dans lequel le MCP est insoluble, en partie inférieure de la cuve et avantageusement l'évacuation du solvant à l'état gazeux en partie supérieure de la cuve.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les FIGURES 1 et 2 sont des schémas représentant un système de stockage thermique, respectivement en charge et en décharge, selon un mode de réalisation de l'invention.
La FIGURE 3 est un diagramme de la pression de vapeur de l'éthanol en fonction de la température et de la fraction d'azote, zoom sur la température T°C [0;100] et la pression P (bar) [0;2,5].

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :
∘ le SST comprend un ciel gazeux 10 composé d'au moins un gaz, pouvant être un gaz inerte et un module de retour des incondensables 12 du ciel gazeux 10 depuis l'échangeur thermique externe 9 dans la cuve 1 ;
   Le ciel de gaz 10 est mis en place au-dessus du MCP 2 pour absorber les variations volumiques du MCP 2 au cours des changements de phase liés aux cycles de charge et de décharge du SST. Dans le cas d'un gaz inerte, celui-ci présente l'avantage de ne pas réagir avec le MCP 2 pour éviter notamment son oxydation. Le ciel de gaz 10 peut dans certains cas permettre de contrôler la vaporisation du MCP. Ce gaz inerte est emporté avec le solvant gazeux qui est évacué, mais n'est pas condensable et est donc réintroduit dans la cuve 1.
∘ le SST comprend un réservoir 8 de solvant condensé, avantageusement en vue de son injection à l'état liquide soit à l'état de vapeur surchauffée. Le réservoir 8 est avantageusement relié au deuxième module d'évacuation de solvant à l'état liquide et à l'échangeur externe 9 pour recevoir le solvant à l'état liquide.
∘ le SST comprend une pompe d'injection 11 destinée à permettre l'injection du solvant liquide 5 en partie inférieure de la cuve, préférentiellement condensé depuis le réservoir 8, jusque dans la cuve 1 ;
   L'utilisation d'une pompe permet de s'affranchir de la problématique d'une hauteur manométrique et permet une installation compacte. Toutefois, une injection passive par une colonne de hauteur manométrique peut être mise en œuvre dans le cadre de l'invention.
∘ le deuxième module d'injection comprend une pompe d'injection ou un dispositif de soufflerie destiné à permettre l'injection du solvant à l'état de vapeur surchauffée 4 en partie inférieure de la cuve 1.
   L'injection de solvant à l'état de vapeur surchauffée au sein du MCP par la partie inférieure de la cuve présente l'avantage de le faire circuler au milieu du MCP et notamment dans des canaux communicants qui ont été formés dans le MCP solide lors d'une décharge précédente.
   De plus, lors de la charge, le solvant à l'état de vapeur surchauffée injecté dans le MCP, génère des bulles se déplaçant à travers le MCP qui passe à l'état liquide lors de ladite charge. Après avoir traversé la cuve donc le MCP en fusion partielle ou totale, les vapeurs de solvant non condensées sont collectées préférentiellement dans le ciel de gaz 10, avant d'être évacuées de la cuve par le premier module d'évacuation.
∘ le premier module d'évacuation comprend une valve d'évacuation 7 destinée à permettre l'évacuation du solvant à l'état gazeux 3 en partie supérieure de la cuve 1.
∘ le deuxième module d'évacuation 31 comprend un bec de débordement destiné à permettre l'évacuation du solvant à l'état liquide 5 en partie supérieure de la cuve 1.
∘ le deuxième module d'évacuation 31 comprend un dispositif de prélèvement agencé en partie supérieure de la cuve et destiné à permettre l'évacuation du solvant à l'état liquide 5 en partie supérieure de la cuve 1.
∘ le MCP 2 est un choisi parmi les MCP sujets à la surfusion.
∘ le MCP présente une surfusion correspondant à la différence entre sa température de cristallisation théorique et sa température réelle de cristallisation égale ou supérieure à 2°C.
∘ le MCP 2 est choisi parmi les MCP ayant un degré de surfusion au moins égal à 2°C, préférentiellement 5°C.
∘ le MCP 2 est choisi parmi les MCP inorganiques tels que les hydrates de sels par exemple tels que l'acétate de sodium tri hydrate ou parmi les MCP organiques tels que les sucres alcooliques par exemple le xylitol, le mannitol, le sorbitol, l'érythritol ou leurs mélanges et les produits dérivés de sucres alcooliques ;
∘ le MCP 2 est choisi parmi le Xylitol, le mannitol, le sorbitol, l'érythritol;
∘ le solvant possède une température d'ébullition inférieure à la température de cristallisation du MCP pour une pression donnée ;
∘ le solvant est de l'éthanol ou du méthanol, ou de l'acétone ;
∘ le fluide caloporteur est de l'eau notamment pour les applications de stockage de chaleur basses températures i.e. inférieures à 100°C
∘ le fluide caloporteur est de l'eau surchauffée pressurisée notamment pour les applications de stockage de chaleur moyennes températures, i.e. supérieures à 100°C,
∘ le fluide caloporteur est de la vapeur notamment pour les applications de stockage de chaleur hautes températures, i.e. souvent supérieures à 150°C
∘ le fluide caloporteur est une huile thermique, notamment pour les applications de stockage de chaleur hautes températures, i.e. jusqu'à à 300°C.
∘ le procédé comprend la condensation du solvant gazeux évacué de la cuve 1 par un échangeur thermique externe 9 transférant l'énergie thermique du solvant gazeux 3 à un fluide caloporteur issu d'un réseau externe de circulation d'un fluide caloporteur.
∘ le procédé comprend l'évaporation du solvant liquide par un échangeur thermique externe 9 pour former une vapeur surchauffée de solvant destinée à être injectée dans la cuve 1 ;
∘ l'échangeur thermique externe 9 transfert l'énergie thermique d'un fluide caloporteur issu d'un réseau externe de circulation d'un fluide caloporteur.

Avantageusement, le procédé de stockage d'énergie thermique par un SST comprend des caractéristiques optionnelles qui peuvent éventuellement être utilisées en association ou alternativement :
∘ la pression gazeuse dans la cuve 1 est ajustée de sorte à contrôler la température de changement d'état du solvant.
∘ la pression gazeuse est ajustée par contrôle de la perte de charge résultant de l'évacuation par le premier module d'évacuation grâce à une valve d'évacuation 7 calibrée.
∘ la pression gazeuse est ajustée par contrôle du retour des incondensables 12 dans la cuve 1.
∘ La pression gazeuse est également contrôlée dans le ciel gazeux 10, et/ou l'échangeur thermique externe 9, et/ou les connexions fluidiques entre les éléments du SST.

Pour la suite de la description, on entend par 'haut' et 'bas', ou leurs dérivés, une qualité de positionnement relatif d'un élément du SST 100 lorsque celui-ci est installé de façon fonctionnelle, le 'haut' étant orienté à l'opposé du sol et le 'bas' étant orienté vers le sol. L'extrémité supérieure se situe en haut et l'extrémité inférieure se situe en bas.

L'invention concerne un Système de Stockage Thermique (SST). Le stockage de l'énergie thermique permet à la chaleur d'être utilisée en différé. La chaleur peut être stockée sous plusieurs formes. L'invention s'attache au stockage sur la forme de chaleur latente avec l'utilisation de matériaux à changement de phase qui emmagasinent l'énergie à mesure qu'ils changent de phase pendant sa fusion. Lorsque le matériau atteint sa température de changement de phase, il absorbe une quantité de chaleur pour réaliser la transformation, connue sous le nom de chaleur latente de fusion ou de vaporisation selon le cas. A l'inverse, lorsque le matériau liquide ou gaz est refroidi, il retourne à la phase solide ou liquide en restituant sa chaleur latente.

Bien que la chaleur latente de fusion soit plus faible que la chaleur latente d'évaporation, la transition solide-liquide est la plus prometteuse puisqu'elle permet de limiter l'expansion volumique et ainsi l'augmentation de pression due au changement de phase. De plus, la plupart des MCP concernés ont une température de dégradation inférieure à leur température d'évaporation.

Le SST selon l'invention utilise préférentiellement un MCP 2, ou un mélange de MCP, solide/liquide.

Le SST selon l'invention comprend une cuve 1 contenant un MCP 2. Le STT selon l'invention ne comprend pas de de système de circulation d'un fluide caloporteur plongeant dans la cuve 1 sous la forme un échangeur thermique interne à la cuve 1 de type d'un faisceau de tubes à ailettes ou de plaques assemblé entre un collecteur et un distributeur hydrauliques.

Le SST selon l'invention est destiné à la circulation d'un solvant dans la cuve au contact direct du MCP.

La cuve 1 est également dénommée calandre, préférentiellement cylindrique pour des raisons de conception mécanique. En fonctionnement, le solvant circule dans la cuve au contact direct avec le MCP 2 contenu dans la cuve 1.

Avantageusement, la cuve 1 s'étend suivant une direction principale verticale définissant ainsi une partie inférieure à proximité du fond 16 de cuve 1 et une partie supérieure à proximité du plafond 17 de cuve 1.

Le SST fonctionne suivant trois phases majeures : la charge, le stockage et la décharge.
- Une phase dite de charge, durant laquelle le fluide caloporteur cède sa chaleur au MCP 2, entrainant la fusion de celui-ci. Plus précisément, le fluide caloporteur cède sa chaleur au MCP 2 par l'intermédiaire du solvant. La température du solvant est alors supérieure à la température de fusion du MCP 2a et son sens de circulation dans le MCP est préférentiellement ascendant. En effet, le solvant est préférentiellement envoyé sous forme gazeuse avantageusement sous forme de vapeur surchauffée à travers le MCP solide 2a, au niveau de la partie inférieure de la cuve. Au contact du MCP, le solvant va se condenser et remonter vers le ciel gazeux 10 du fait d'une plus faible masse volumique du solvant par rapport au MCP.
- Une phase, dite de stockage, au cours de laquelle la circulation du fluide caloporteur dans l'échangeur thermique externe 9, et avantageusement du solvant, est arrêtée et le MCP 2 conserve l'énergie thermique stockée.
- Une phase dite de décharge durant laquelle le MCP liquide 2b cède sa chaleur au fluide caloporteur, plus précisément le MCP 2b cède sa chaleur au fluide caloporteur par l'intermédiaire du solvant. Le solvant circule à une température inférieure à la température de solidification du MCP 2b, entrainant la cristallisation du matériau et le réchauffement du solvant. Le solvant circule préférentiellement dans le sens ascendant. En effet, le solvant est préférentiellement envoyé sous forme liquide 5 à travers le MCP en partie inférieure de la cuve 1. Au contact du MCP en fusion, le solvant initialement à l'état liquide va s'évaporer et les vapeurs de solvants vont progressivement remonter à la surface du MCP au niveau du ciel gazeux 10.

L'invention s'applique à tous les MCP sujets au phénomène de surfusion. La surfusion est la capacité du MCP à descendre sous le point de cristallisation tout en restant sous forme liquide. Pour l'invention, un MCP est considéré comme sujet à la surfusion à partir d'un degré de surfusion de 2°C, préférentiellement 5°C ce qui peut alors empêcher la décharge du SST. Le degré de surfusion est la différence entre la température de cristallisation théorique du MCP et la température réelle de cristallisation du MCP. La température réelle de cristallisation étant inférieure à la température théorique de cristallisation.

Des degrés de surfusion beaucoup plus élevés peuvent également être résolus par l'invention, tel que par exemple pour le Xylitol qui peut descendre sans difficulté en surfusion jusqu'à la température ambiante ; compte tenu de sa température de cristallisation considérée entre 93°C et 95°C, le degré de surfusion du Xylitol peut être dans ce cas d'environ 70°C.

Préférentiellement, le MCP est choisi parmi les composés organiques et notamment les alcools de sucres appartenant à la famille des polyols, préférentiellement le sorbitol, le mannitol, le xylitol, le lactitolet l'érythritol. Ces produits sont extraits des plantes et peuvent être qualifiés de biosourcés.

Les alcools de sucre possèdent des valeurs d'enthalpie de phase élevées. On relève ainsi une enthalpie de fusion de 344 J/g pour l'érythritol, de 280 J/g pour le xylitol ou encore 341 J/g pour le mannitol. Ils présentent aussi une grande masse volumique de l'ordre de 1500 kg/m3, ce qui conduit à une densité énergétique très élevée. Ce sont par ailleurs des produits peu coûteux et non toxiques.

Préférentiellement, le MCP est choisi parmi les hydrates de sel qui sont des sels inorganiques qui contiennent de l'eau et dont la formule générale est AB.nH2O. Pendant la charge, la déshydratation du sel a lieu. Le produit de cette déshydratation peut être un hydrate de sel avec moins molécules d'eau selon la formule : *AB.nH2*O*→AB*.*mH2*O+(n-m)*H*2O ; ou bien le même sel sous sa forme anhydre : *AB.nH2*O*→AB*+n*H2*O

Préférentiellement, CaCl2.6H2O, Mn(NO3)2.6H2O, Al2(SO4)3.18H20, la bischofite comme exemple d'un mélange d'hydrates de sels composé à 95% massique de MgCl2.6H2O et à 5% massique de KMgCl3.6H2O, Li2SO4.H2O ayant une température de fusion autour de 98.9°C.

A titre d'exemple préféré, l'acétate de sodium tri hydrate, est un sel hydraté ou eutectique pouvant être utilisé comme MCP dans le cadre de l'invention.

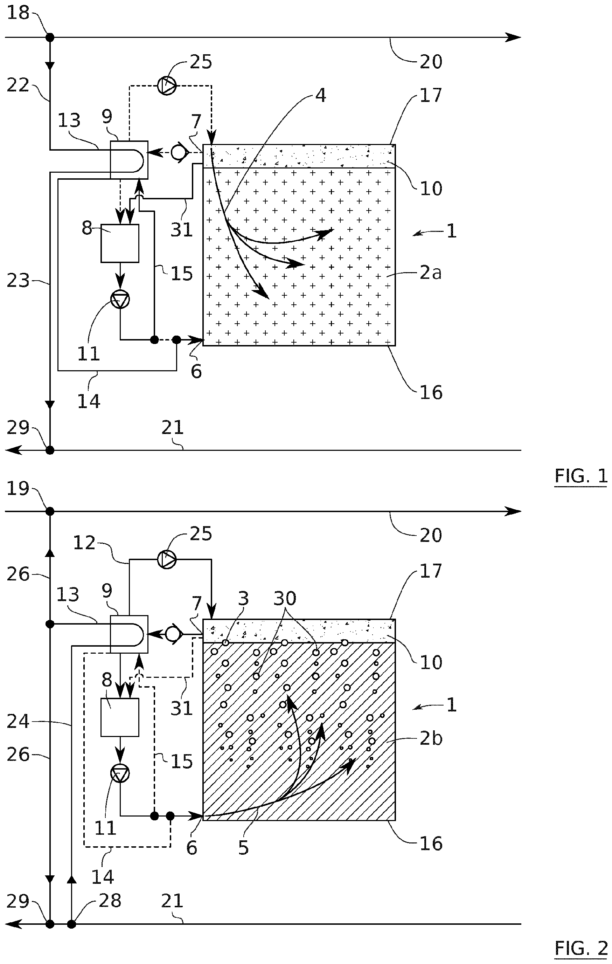

Le mode de réalisation illustré aux figures 1 et 2 illustre un SST comprenant une cuve 1 recevant un MCP 2 au-dessus duquel est agencé un ciel gazeux 10. La cuve 1 ne comprend pas de faisceau de tubes ou de plaques plongeant dans le MCP. Le SST comprend un système de circulation de solvant dans la cuve 1 directement au contact du MCP.

De manière caractéristique de l'invention, le SST comprend un dispositif de contrôle de la cristallisation du MCP.

Le dispositif de contrôle de la cristallisation comprend un premier module d'injection d'un solvant à l'état liquide 5 dans la cuve 1. Le premier module d'injection comprend préférentiellement au moins un injecteur 6, selon une possibilité deux ou plusieurs injecteurs 6 sont prévus pour améliorer la diffusion du solvant dans la cuve 1 et plus précisément dans le MCP 2.

Le premier module d'injection est configuré pour orienter le flux de solvant en direction de la partie supérieure de la cuve 1.

Selon une possibilité préférée, le premier module d'injection comprend un élément configuré pour l'injection active du solvant par l'injecteur 6. Selon cette possibilité, le premier module d'injection comprend une pompe d'injection 11 du solvant.

Le dispositif de contrôle comprend également un premier module d'évacuation du solvant à l'état gazeux 3. Le premier module d'évacuation comprend préférentiellement au moins une valve d'évacuation 7.

Préférentiellement, le premier module d'injection est agencé en partie inférieure de la cuve 1, c'est-à-dire dans le tiers inférieur de la cuve 1 plus préférentiellement, le premier module d'injection est disposé à l'extrémité inférieure de la cuve 1, c'est-à-dire à proximité immédiate du fond 16 de la cuve1.

Préférentiellement, le premier module d'évacuation est agencé en partie supérieure de la cuve 1 c'est-à-dire dans le tiers supérieur de la cuve 1 plus préférentiellement, le premier module d'évacuation est disposé à l'extrémité supérieure de la cuve 1, c'est-à-dire à proximité immédiate du plafond 17 de la cuve 1.

Ces dispositions particulières permettent de prévoir un parcours le plus long possible pour le solvant cheminant dans le MCP 2 contenu dans la cuve 1.

Le dispositif de contrôle comprend également un deuxième module d'injection destiné à injecter le solvant diphasique à l'état de vapeur surchauffée 4 dans la cuve 1, plus généralement le solvant est à l'état gazeux.

Le deuxième module d'injection comprend préférentiellement au moins un injecteur 14, selon une possibilité deux ou plusieurs injecteurs 14 sont prévus pour améliorer la diffusion du solvant dans la cuve 1 et plus précisément dans le MCP 2.

Le deuxième module d'injection est configuré pour orienter le flux de solvant en direction de la partie supérieure de la cuve 1.

Selon une possibilité préférée, le deuxième module d'injection comprend un élément configuré pour l'injection active du solvant par l'injecteur 14. Selon cette possibilité, le deuxième module d'injection comprend une pompe d'injection du solvant ou un dispositif de soufflerie tel un ventilateur.

Préférentiellement, le deuxième module d'injection est agencé en partie inférieure de la cuve 1, c'est-à-dire dans le tiers inférieur de la cuve 1 plus préférentiellement, le deuxième module d'injection est disposé à l'extrémité inférieure de la cuve 1, c'est-à-dire à proximité immédiate du fond 16 de la cuve1.

Selon un mode de réalisation préféré, le deuxième module d'injection partage les mêmes moyens avec le premier module d'injection et en particulier le ou les injecteurs 6 et 14 sont communs aux deux modules. De cette manière, on limite les modules et les risques d'obturation des injecteurs lors des phases de charge ou de décharge sont réduits. En effet, lors de la décharge, il existe un risque de reflux et de cristallisation du MCP 2 au niveau de l'injecteur 6. L'utilisation de l'injecteur 6, 14 lors de la phase de décharge pour injecter le solvant à l'état gazeux surchauffé 4 dans la cuve 1 au contact du MCP 2 permet de limiter voir réduire ce risque.

Selon un autre mode de réalisation, le deuxième module d'injection comprend au moins un conduit plongeant dans la cuve 1; Le conduit s'étend depuis la partie supérieure de la cuve 1 jusque dans sa partie inférieure au niveau de laquelle le conduit comprend selon une possibilité un faisceau de tubes débouchant dans le MCP 2, préférentiellement orientés vers le fond 16 de la cuve 1 de sorte à limiter les risques d'entrée du MCP lorsque celui-ci est à l'état liquide. Le solvant à l'état gazeux surchauffé 4 circule donc dans le conduit du haut vers le bas de la cuve 1 où débouche le conduit par un faisceau de tubes. Le solvant à l'état gazeux surchauffé 4 remonte alors vers le haut de la cuve 1 au contact direct du MCP 2.

Avantageusement, le SST selon l'invention comprend un deuxième module d'évacuation 31 destiné à évacuer le solvant diphasique à l'état liquide 5 en partie supérieure de la cuve 1. Préférentiellement, le deuxième module d'évacuation 31 est agencé en partie supérieure de la cuve 1 c'est-à-dire dans le tiers supérieur de la cuve 1 plus préférentiellement, le deuxième module d'évacuation 31 est disposé à l'extrémité supérieure de la cuve 1, c'est-à-dire à proximité immédiate du plafond 17 de la cuve 1. Selon une première possibilité, le deuxième module d'évacuation 31 comprend un bec de débordement permettant l'évacuation du solvant à l'état liquide 5 de manière passive par simple débordement. L'élément de débordement peut toutefois être contrôlé de sorte à s'assurer de n'évacuer que le solvant liquide 5 et non pas du MCP 2a liquide. Le bec de débordement est avantageusement agencé à un niveau de hauteur de la cuve 1 correspondant au niveau du solvant liquide 5 en fin de décharge. Suivant une deuxième possibilité, le deuxième module d'évacuation 31 comprend un dispositif de prélèvement du solvant à l'état liquide 5 à la surface du MCP 2. Le dispositif de prélèvement peut par exemple comprendre un tube plongeant dans la cuve au niveau du solvant à l'état liquide 5 et une pompe permettant d'aspirer le liquide au niveau de l'embouchure du tube.

Le deuxième module d'évacuation 31 relie la cuve 1 au réservoir 8 de sorte que le solvant à l'état liquide 5 évacué en partie supérieure de la cuve 1 retourne dans le réservoir 8 pour être injecté lors d'une phase de décharge ultérieure.

Ces dispositions particulières permettent de prévoir un parcours le plus long possible pour le solvant cheminant dans le MCP 2 contenu dans la cuve 1.

Le solvant utilisé est diphasique entre deux états : liquide/gaz. Il est choisi de sorte à avoir une température d'ébullition dans la gamme d'utilisation du MCP.

On entend par solvant un fluide ayant la propriété de dissoudre, diluer ou extraire d'autres composants.

À titre d'exemple de solvant, l'éthanol pur qui présente une température d'ébullition de l'ordre de 78°C à la pression atmosphérique, constitue un solvant diphasique particulièrement adapté à l'utilisation comme MCP du Xylitol, (dont la température de cristallisation est proche de 93°C,), d'autant que ces deux constituants ne sont pas solubles l'un dans l'autre.

Lors de l'ébullition du solvant dans le MCP, les bulles formées créent tout d'abord une agitation mécanique propice à la cristallisation, de plus les bulles en favorisant la formation et la dispersion des sites de nucléation, augmentent la probabilité de nucléation spontanée du MCP.

Le phénomène de surfusion est alors réduit voir supprimé.

Le solvant est avantageusement choisi pour que le MCP y soit non miscible ou encore non soluble. Cette caractéristique permet elle aussi de créer des sites de nucléation accélérant la vitesse de cristallisation.

Or, la vitesse de cristallisation est déterminante pour la puissance du système de stockage. Si le MCP est long à cristalliser, il rendra sa chaleur très lentement et limitera la puissance échangée avec le fluide caloporteur. Ainsi, grâce à l'invention, les performances du SST sont améliorées.

Le solvant présente avantageusement une masse volumique inférieure à celle du MCP de sorte à permettre la séparation des deux composés, le solvant se positionnant au-dessus du MCP.

À titre d'exemple préféré, le solvant est choisi parmi l'éthanol, le méthanol, l'acétone.

Selon une possibilité avantageusement de l'invention, le SST comprend un échangeur thermique externe 9 destiné à réaliser le transfert d'énergie thermique entre le solvant circulant dans la cuve 1 au contact du MCP et un fluide caloporteur issu du réseau externe de circulation du fluide caloporteur. L'échangeur thermique 9 est configuré pour alternativement condenser le solvant à l'état gazeux 3 issu de la cuve 1 par le premier module d'évacuation et évaporer le solvant à l'état liquide 5 pour l'injecter à l'état de vapeur surchauffée 4 dans la cuve 1.

L'échangeur thermique externe 9 est relié d'une part au premier module d'évacuation 7 l'alimentant et d'autre part à un réservoir 8 destiné à contenir le solvant condensé 5 en vue notamment de sa réinjection dans la cuve 1.

En parallèle, l'échangeur thermique externe 9 reçoit d'une part, grâce à un injecteur 15, le solvant liquide 5 en provenance du réservoir 8 en vue de son évaporation et d'autre part est relié à l'injecteur 14 de solvant à l'état de vapeur surchauffée 4 pour son injection dans la cuve 1.

L'échangeur thermique 9 est configuré pour échanger la chaleur entre le solvant et un fluide caloporteur par exemple le fluide caloporteur 13 circulant dans le système de circulation du fluide caloporteur. Dans ce dernier cas, l'échangeur est relié au réseau externe de circulation du fluide caloporteur 20, 21.

Le condenseur 9 solvant gazeux/fluide caloporteur doit être configuré pour que la température du fluide caloporteur soit inférieure à la température de rosée du solvant suivant la fraction de gaz inerte pouvant être entrainée lors de l'évacuation du solvant gazeux par la valve d'évacuation 7. La température de rosée est dimensionnée en fonction de la pression interne dans le condenseur côté condensation.

Suivant un mode de réalisation, la cuve 1 comprend un ciel gazeux 10 pouvant comprendre au moins un gaz inerte ou un mélange de gaz inertes et/ou des vapeurs de solvant.

La présence d'un ciel gazeux 10 permet notamment la pressurisation contrôle de la cuve 1.

La pressurisation du ciel gazeux 10 du SST, conduit à augmenter la température d'ébullition/condensation du solvant traversant le MCP 2.

Lors de la charge, la pressurisation du ciel gazeux 10 permet de faire condenser à une plus haute température le solvant injecté à l'état gazeux surchauffé 4 à travers le MCP 2.

Lors de la décharge, la pressurisation du ciel gazeux 10 permet de faire évaporer à plus haute température le solvant injecté à l'état liquide 5 à travers le MCP 2. Réciproquement la dépressurisation du ciel gazeux 10 permet de faire évaporer à plus basse température le solvant injecté à l'état liquide 5 à travers le MCP 2.

Le pilotage de la pressurisation du ciel gazeux 10 permet de contrôler la puissance échangée avec le MCP, la quantité de condensat ou de vapeur générée et la température du MCP .Avantageusement, le ciel gazeux 10 est formé par au moins un gaz inerte tel que notamment l'azote, d'argon ou d'hélium, pour éviter les problèmes de compatibilité avec l'air ambiant de certains MCP tels que les sucres alcooliques qui réagissent avec l'oxygène et s'oxydent.

Suivant ce dernier mode de réalisation, il est avantageusement prévu que le SST comprenne un système de retour des incondensables 12 du ciel gazeux 10. En effet, lors de l'évacuation du solvant à l'état gazeux 3 par le premier module d'évacuation, le ciel gazeux 10 est également évacué. Cependant, le gaz inerte contenu dans le ciel gazeux 10 n'est pas condensable dans les conditions de fonctionnement de l'échangeur thermique externe 9. Le système de retour 12 permet de récupérer le ciel gazeux 10 qui ne condense pas dans le condenseur 9 contrairement au solvant et de le renvoyer dans la cuve 1. Selon une possibilité, le système de retour des incondensables 12 comprend un moyen de soufflerie telle qu'un ventilateur, une soufflante.

Dans ce mode de réalisation, il est important de prendre en considération le fait que le solvant gazeux que l'on souhaite condenser n'est pas pur, mais comprend une certaine proportion de gaz inerte.

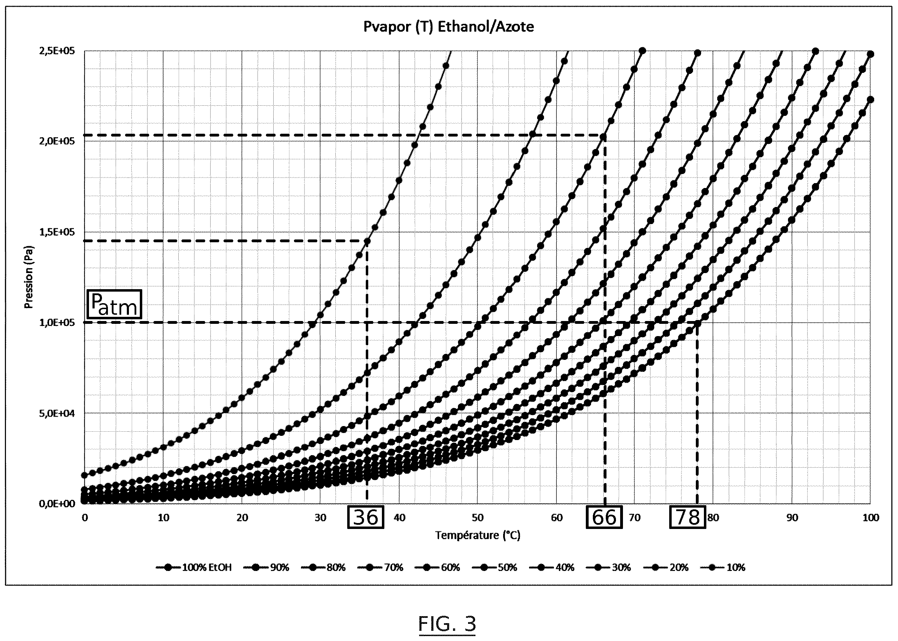

La figure 3 donne les courbes de pression de l'éthanol en fonction de la température pour différentes fractions d'azote contenues dans de l'éthanol gazeux.

On peut constater qu'il sera nécessaire de travailler dans l'échangeur 9 en pression pour condenser le plus possible d'éthanol. Deux points particuliers sont indiqués :
- Température de condensation de 36°C correspondant à une température d'air ambiant en été ; il sera nécessaire de travailler à une pression de minimum 1,5 bar pour pouvoir condenser une grande partie des vapeurs d'éthanol. Dans ces conditions de Pression et de Température, il restera au minimum 10% en fraction de vapeurs d'éthanol incondensables avec l'azote.
- Température de condensation de 66°C correspondant à une température lors d'un couplage à un Réseau De Chaleur (RDC), il sera nécessaire de travailler à une pression de minimum 2,1 bars pour pouvoir condenser une grande partie des vapeurs d'éthanol. Dans ces conditions de Pression et de Température, il restera au minimum 30% en fraction de vapeurs d'éthanol incondensables avec l'azote. A l'inverse, l'évaporateur 9 solvant liquide/fluide caloporteur doit être configuré pour que la température du fluide caloporteur soit supérieure à la température d'évaporation du solvant suivant. La température d'évaporation est dimensionnée en fonction de la pression interne dans l'évaporateur côté évaporation.

Le SST comprend avantageusement un réservoir 8 de solvant. Préférentiellement, le dispositif de contrôle de la cristallisation est configuré pour fonctionner en circuit fermé, c'est-à-dire que le solvant est placé à l'état liquide 5 dans le réservoir 8, puis est injecté à l'état liquide 5 dans la cuve 1 par le module d'injection 6, puis il est évacué à l'état gazeux 3 par le premier module d'évacuation 7 et condensé par l'échangeur thermique externe 9 avant de retourner à l'état liquide 5 dans le réservoir 8 où il peut à être réintroduit dans l'échangeur thermique externe 9 pour le transformer en vapeur surchauffée 4 et l'injecté dans la cuve 1 par le deuxième module d'injection 14 puis l'évacué à l'état liquide 5 par le deuxième module d'évacuation 31 pour retourner dans le réservoir 8.

Aux figures 1 et 2, le SST selon l'invention comprend une cuve 1 contenant un MCP 2, un système de circulation de solvant dans la cuve 1.

Un ciel de gaz 10 est aménagé au-dessus du MCP 2 en partie supérieure de la cuve 1. Préférentiellement, le ciel de gaz 10 comprend un gaz, ou un mélange, de gaz inerte tel que l'azote.

Le SST comprend également le dispositif de contrôle de la cristallisation comprenant le premier module d'injection comprenant l'injecteur 6, agencé en partie inférieure de la cuve 1, alimenté par une pompe d'injection 11 reliée au réservoir 8 de solvant à l'état liquide, le premier module d'évacuation comprenant une valve d'évacuation 7, agencé en partie supérieure de la cuve 1, alimentant le condenseur 9 de solvant échangeant avec un fluide caloporteur, pour alimenter le réservoir 8 en solvant condensé à l'état liquide 5 et le deuxième module d'injection comprenant un injecteur 14 reliant le réservoir 8 de solvant à l'état liquide 5 à l'évaporateur 9 de solvant lui -même échangeant avec le fluide caloporteur pour alimenter en solvant à l'état de vapeur surchauffée 4 un injecteur 14, agencé en partie inférieure de la cuve 1, éventuellement alimenté par une pompe d'injection ou un dispositif de soufflerie telle qu'un ventilateur, une soufflante.

Le SST comprend un système 12 de retour des incondensables du ciel gazeux 10. Ce système récupère les gaz incondensables dans le condenseur 9.

La figure 1 illustre la phase de charge dans laquelle le SST charge l'énergie thermique apportée par le fluide caloporteur. Dans cette phase, le solvant circule de bas en haut dans la cuve 1 au contact du MCP 2a à l'état solide. Le solvant pénètre dans la cuve 1 à l'état de vapeur surchauffée 4 à une première température à partir d'un injecteur 14 qui distribue le fluide dans le MCP 2 de la cuve 1, préférentiellement en direction du plafond 17 de la cuve 1. En cheminant dans la cuve 1 au contact direct du MCP 2a, le solvant cède de la chaleur au MCP 2a. Le solvant à l'état de vapeur surchauffée 4 se refroidit au contact du MCP 2 entrainant sa condensation. Le solvant à l'état liquide 5 remonte à la surface du MCP 2 à l'interface avec le ciel gazeux 10, notamment du fait de la plus faible masse volumique du solvant par rapport au MCP 2. Le solvant condensé est évacué de la cuve 1 par débordement ou par prélèvement en partie supérieure de la cuve. Éventuellement, si une partie du solvant ne se condense pas et reste à l'état de vapeur surchauffée 4, ou plus précisément à l'état gazeux 3 il est évacué par la valve d'évacuation 7, notamment si la pression est supérieure à une valeur seuil. La remontée du solvant est également facilitée par la formation de canaux au travers du MCP solide formés lors de la précédente phase de décharge. Le MCP 2a qui récupère l'énergie thermique du solvant va augmenter en température jusqu'à changer d'état. Classiquement, le MCP 2 passe de l'état solide 2a à l'état liquide 2b lors de la phase de charge. Lorsque le MCP 2a fond au contact de la vapeur surchauffée 4 de solvant, le MCP 2b liquide précipite par gravité vers le fond des canaux. Il s'amorce et s'entraine alors dans les canaux formés dans le MCP encore solide. Les canaux se remplissent partiellement par du MCP liquide précipitant et des condensats de solvant précipitant également. En parallèle, un phénomène de bullage intervient lors du passage du solvant injecté sous forme de vapeur surchauffée. Il est à noter que ce phénomène de bullage, augmente l'agitation dans le système et conduit par voie de conséquence à l'intensification de l'échange thermique entre le solvant et le MCP. En fin de charge du SST, le MCP est majoritairement voir intégralement à l'état liquide. Une partie du solvant injecté au cours de cette phase est également condensé et se retrouve au-dessus du MCP liquide compte tenu de sa plus faible masse volumique. En fin de charge du SST, le solvant injecté à l'état de gaz surchauffé traverse le MCP liquide puis les condensats de solvant, à l'instar d'un bullage de gaz dans un milieu liquide. Il convient avantageusement de réduire en fin de charge du SST, le débit de vapeur surchauffée de solvant pour limiter le brassage du MCP liquide et des condensats de solvant, pour favoriser la séparation de phase entre les condensats de solvant en partie supérieure et le MCP liquide en partie inférieure, compte tenu de la différence de densité de ces deux éléments. De cette manière, la récupération de solvant liquide pur est plus efficace, i.e. sans MCP, compte tenu de l'insolubilité de ces deux éléments. Le solvant liquide est évacué de la cuve par le deuxième moyen d'évacuation 31 relié au réservoir 8 de sorte à déverser le solvant liquide dans le réservoir 8 en vue d'une prochaine utilisation lors d'une étape de décharge ultérieure.

Au niveau de l'échangeur thermique 9, le solvant à l'état de vapeur surchauffée 4 est généré par l'échangeur thermique 9 qui fonctionne en évaporateur. Le solvant à l'état liquide 5 est introduit dans l'échangeur 9 par un injecteur 15 alimenté par le réservoir 8, par exemple grâce à la pompe d'injection 11. En parallèle, l'échangeur 9 reçoit un flux de fluide caloporteur 13. Le fluide caloporteur est prélevé à un point de prélèvement 18 sur le départ de réseau du fluide caloporteur chaud 20, à titre d'exemple à 110°C. Le fluide caloporteur pénètre dans l'échangeur à une première température 22 transfert sa chaleur au solvant qui passe de l'état liquide 5 à l'état de vapeur surchauffée 4 puis le fluide caloporteur ressort de l'échangeur 9 à une deuxième température 23 plus faible que la première. Le fluide caloporteur refroidi est rejeté à un point de rejet 29 dans le retour de réseau du fluide caloporteur froid 21, à titre d'exemple à 65°, permettant ainsi un préchauffage du fluide destiné à une chaudière.

Pendant cette phase de charge, le changement d'état du MCP 2 ne nécessite pas de contrôle de la cristallisation. De préférence, l'injection de solvant à l'état liquide est réduite voire nulle. Dans ce cas-là, la pompe d'injection 11 est configurée pour que l'injection du solvant soit réduite ou arrêtée. Dans ce cas, il peut être prévu un débit très faible de sorte à éviter tout risque de reflux et de cristallisation du MCP 2 au niveau de l'injecteur 6. Avantageusement, le deuxième moyen d'injection configuré pour injecter le solvant à l'état de vapeur surchauffée utilise les mêmes moyens que le premier moyen d'injection configuré pour injecter le solvant à l'état liquide. Dans ce mode de réalisation illustré aux figures 1 et 2, l'injecteur 14 et l'injecteur 6 forment un seul et même injecteur.

La figure 2 illustre la phase de décharge dans laquelle le SST décharge l'énergie thermique stockée au profit du fluide caloporteur. Dans cette phase, le solvant circule de bas en haut dans le système de circulation, plus précisément dans la cuve 1 au contact direct du MCP 2. Le solvant pénètre à une première température 26 dans la cuve par un injecteur 6 qui distribue le fluide dans le MCP 2 de la cuve 1. En cheminant dans la cuve 1 en contact avec le MCP 2, le MCP 2 cède de la chaleur au solvant. Le solvant est évacué de la cuve 1 par la valve d'évacuation 7. Le solvant ressort à une deuxième température plus élevée que la première température. Le MCP 2 qui cède l'énergie thermique au solvant va diminuer en température jusqu'à changer d'état.

Classiquement, le MCP passe de l'état liquide 2b à l'état solide 2a lors de la phase de décharge.

Pendant cette phase de décharge, le changement d'état du MCP 2 se fait par cristallisation et nécessite typiquement un contrôle pour éviter les risques de surfusion notamment. Le solvant à l'état liquide 5 est donc injecté dans la cuve 1 par l'injecteur 6 directement au contact du MCP 1. Dans ce cas-là, la pompe d'injection 11 est configurée pour que l'injection du solvant soit réalisée selon un débit prédéfini. Le solvant à l'état liquide 5 va augmenter en température au contact du MCP 2b présentant une température plus élevée. L'augmentation de la température du solvant et sa plus faible densité contribuent à entrainer le MCP en direction de l'extrémité supérieure de la cuve 1. Le solvant va atteindre sa température d'ébullition et passer à l'état gazeux 3. Le passage à l'état gazeux 3 se fait avec la formation de bulles 30 dans le MCP 2 qui constituent des sites de nucléations propices à la cristallisation du MCP permettant le déclenchement de celle-ci.

Le déplacement du solvant d'abord à l'état liquide 5 puis à l'état gazeux 3 contribue à modifier la température du MCP 2 et donc sa viscosité, à générer une agitation mécanique au cœur du MCP 2 favorisant la cristallisation et donc permettant d'accélérer la vitesse de cristallisation.

Le solvant à l'état gazeux 3 se retrouve à l'extrémité supérieure de la cuve 1 mélangé au ciel gazeux 10. Le mélange du solvant gazeux 3 et du ciel de gaz 10 est évacué par une valve d'évacuation 7. Préférentiellement, la valve d'évacuation 7 peut être une vanne régulée ou un clapet d'évacuation taré pour une pression adaptée au mélange de gaz à évacuer. La pression correspond à la pression de vapeur saturante du solvant contenant une fraction de gaz inerte. La valve d'évacuation 7 alimente le condenseur 9 en solvant à l'état gazeux 3. L'échange thermique entre le solvant à l'état gazeux 3 et un fluide caloporteur permet de condenser le solvant qui est amené à l'état liquide 5 au réservoir 8 avant d'être à nouveau injecté dans la cuve 1. De ce fait, l'échangeur 9 est agencé sur le réseau externe de circulation 20, 21 du fluide caloporteur.

Le fluide caloporteur du condenseur 9 est issu du réseau externe de circulation 20, 21 du fluide caloporteur, c'est-à-dire que le fluide caloporteur pénétrant dans le l'échangeur 9 est prélevé à un point de prélèvement 28 sur le réseau froid du fluide caloporteur 21, et présente une première température 24. Le fluide caloporteur ayant récupéré la chaleur du solvant gazeux 3 dans le condenseur 9 est à une deuxième température 26 supérieure à la première température 24.

Si cette deuxième température 26 est inférieure à une température de consigne minimale du départ du réseau chaud 20 alors le fluide caloporteur est renvoyé, préférentiellement en un point de rejet 29 en aval du point de prélèvement 28, dans le réseau froid de fluide caloporteur 21 de sorte à permettre un préchauffage de celui-ci.

Si cette deuxième température 26 est supérieure à une température de consigne minimale du départ du réseau chaud 20 alors le fluide caloporteur est renvoyé, préférentiellement en un point de rejet 19 dans le réseau chaud de fluide caloporteur 20.

Cette disposition permet de valoriser l'énergie thermique emmagasinée par le solvant lors de son changement d'état vers l'état gazeux en la réinjectant dans le réseau.

Selon un mode de réalisation avantageux de l'invention, la température de changement d'état liquide/vapeur du solvant diphasique peut être modulée en contrôlant la pression gazeuse dans la cuve du SST contenant le MCP 2 et plus précisément dans le ciel de gaz 10, dans la partie gazeuse de l'échangeur thermique externe 9, ainsi que dans toutes les liaisons reliant ces équipements. Cette pression peut être ajustée :
- soit en contrôlant la perte de charge due à l'évacuation ou sortie gazeuse effectuée par le premier module d'évacuation, par exemple en utilisant un orifice calibré ou une vanne de réglage,
- soit en contrôlant la fraction d'incondensable, par exemple du gaz inerte, dans l'échangeur thermique externe 9, qui retourne au ciel de gaz 10 par le retour d'incondensables 12.

À titre d'exemple, non limitatif, un SST selon l'invention contient dans sa cuve 1 60 kg de Xylitol utilisé comme MCP, qui échange sa chaleur avec de l'eau pressurisée surchauffée, utilisée comme fluide caloporteur, dont la température d'entrée est de 115°C à la charge et de 65°C à la décharge.

Dans cette configuration ce SST est capable de restituer environ 10 kWh d'énergie thermique, suivant la durée de stockage et la qualité de l'isolation thermique. Le SST comprend un réservoir contenant environ 0.3 à 1 litre de solvant diphasique, formant un système d'amorçage. Le solvant est injecté à un débit liquide de 86 mm3/s, pour favoriser efficacement la cristallisation du Xylitol et en augmenter sa vitesse.

L'invention n'est pas limitée aux modes de réalisations précédemment décrits et s'étend à tous les modes de réalisation couverts par les revendications

### REFERENCES

- 1.: Cuve
- 2. a.: MCP solide
- 2. b.: MCP liquide
- 3.: Solvant à l'état gazeux
- 4.: Solvant à l'état de vapeur surchauffée
- 5.: Solvant à l'état liquide
- 6.: Injecteur
- 7.: Valve d'évacuation
- 8.: Réservoir
- 9.: Echangeur thermique externe
- 10.: Ciel de gaz
- 11.: Pompe d'injection
- 12.: Retour des incondensable
- 13.: Circulation fluide caloporteur dans l'échangeur thermique
- 14.: Injecteur de solvant à l'état de vapeur surchauffée
- 15.: Injecteur de solvant à l'état liquide dans l'échangeur
- 16.: Fond de cuve
- 17.: Plafond de cuve
- 18.: Point de prélèvement
- 19.: Point de rejet dans le départ de réseau de fluide caloporteur
- 20.: Départ réseau de fluide caloporteur
- 21.: Retour réseau de fluide caloporteur
- 22.: Fluide caloporteur à une première température
- 23.: Fluide caloporteur à une deuxième température inférieure à la température 22
- 24.: Fluide caloporteur à une première température
- 25.: Pompe
- 26.: Fluide caloporteur à une deuxième température supérieure à la température 24
- 28.: Point de prélèvement
- 29.: Point de rejet dans le retour réseau
- 30.: Bulles
- 31.: Deuxième module d'évacuation

## Revendications

1. Système de Stockage Thermique (SST) par Matériau à Changement de Phase (MCP) (2) comprenant :
- une cuve (1) destinée à contenir un MCP (2),
- un système de circulation destiné à la circulation dans la cuve (1) d'un solvant au contact direct du MCP (2),
**caractérisé en ce qu'**il comprend un dispositif de contrôle de la cristallisation du MCP (2) comprenant :
- un premier module d'injection configuré pour injecter, en partie inférieure de la cuve (1), dans le MCP (2), un solvant diphasique, liquide /gaz à l'état liquide (5), dans lequel le MCP (2) est insoluble,
- un premier module d'évacuation configuré pour évacuer le solvant diphasique à l'état gazeux (3) en partie supérieure de la cuve (1), opposée à la partie inférieure,
- un deuxième module d'injection configuré pour injecter en partie inférieure de la cuve, le solvant à l'état gazeux au contact direct du MCP (2),
- un deuxième module d'évacuation (31) configuré pour évacuer le solvant diphasique à l'état liquide (5) en partie supérieure de la cuve (1), et
- un échangeur thermique externe (9) destiné à transférer l'énergie thermique entre le solvant et un fluide caloporteur issu d'un réseau externe de circulation du fluide caloporteur (20,21) et configuré pour alternativement condenser le solvant gazeux évacué de la cuve (1) par le premier module d'évacuation ou évaporer le solvant à l'état liquide pour son injection à l'état de vapeur surchauffée par le deuxième module d'injection.

2. SST selon la revendication 1 comprenant au moins un MCP sujet à la surfusion.

3. SST selon la revendication précédente dans lequel le MCP présente une surfusion correspondant à la différence entre sa température de cristallisation théorique et sa température réelle de cristallisation égale ou supérieure à 2°C.

4. SST selon l'une quelconque des revendications précédentes comprenant un ciel gazeux (10) composé d'au moins un gaz inerte, et un module de retour des incondensables (12) du ciel gazeux (10) depuis l'échangeur thermique externe (9) vers la cuve (1).

5. SST selon l'une quelconque des revendications précédentes dans lequel le premier module d'injection comprend une pompe d'injection (11) destinée à permettre l'injection du solvant à l'état liquide (5) en partie inférieure de la cuve (1) et/ou le deuxième module d'injection comprend une pompe d'injection ou un dispositif de soufflerie destiné à permettre l'injection du solvant à l'état de vapeur surchauffée (4) en partie supérieure de la cuve (1).

6. SST selon l'une quelconque des revendications précédentes dans lequel le premier module d'évacuation comprend une valve d'évacuation (7) destinée à permettre l'évacuation du solvant à l'état gazeux (3) en partie supérieure de la cuve (1).

7. SST selon l'une quelconque des revendications précédentes dans lequel le deuxième module d'évacuation (31) comprend un bec de débordement agencé en partie supérieure de la cuve (1) destiné à permettre l'évacuation du solvant à l'état liquide (5) en partie supérieure de la cuve (1).

8. SST selon l'une quelconque des revendications 1 à 6 dans lequel le deuxième module d'évacuation (31) comprend un dispositif de prélèvement agencé en partie supérieure de la cuve (1).

9. SST selon l'une quelconque des revendications précédentes comprenant un réservoir (8) configuré pour recevoir le solvant à l'état liquide (5).

10. SST selon l'une quelconque des revendications précédentes comprenant un MCP (2) choisi parmi les sucres alcooliques, les produits dérivés de sucres alcooliques et les hydrates de sels, de préférence choisi parmi le Xylitol, le sorbitol, le mannitol, l'érythritol.

11. SST selon l'une quelconque des revendications précédentes comprenant au moins un solvant choisi parmi l'éthanol, le méthanol, l'acétone.

12. Procédé de contrôle de la cristallisation d'un MCP (2) contenu dans une cuve (1) d'un SST selon l'une quelconque des revendications précédentes **caractérisé en ce qu'**il comprend l'injection dans le MCP contenu dans la cuve d'un solvant diphasique, à l'état liquide, dans lequel le MCP (2) est insoluble, en partie inférieure de la cuve (1) et l'évacuation du solvant à l'état gazeux en partie supérieure de la cuve (1).

13. Procédé de stockage d'énergie thermique par un SST selon l'une quelconque des revendications 1 à 11 **caractérisé en ce qu'**il comprend :
- une phase de charge au cours de laquelle un fluide caloporteur cède sa chaleur à un MCP (2a) contenu dans une cuve (1) entrainant la fusion du MCP (2a) et comprenant l'injection du solvant diphasique, à l'état de vapeur surchauffée (4), dans lequel le MCP (2) est insoluble, en partie inférieure de la cuve directement au contact du MCP par un deuxième module d'injection, et l'évacuation du solvant, à liquide (5), en partie supérieure de la cuve (1), par un deuxième module d'évacuation
- une phase de décharge au cours de laquelle le MCP (2b) cède sa chaleur au fluide caloporteur entrainant la cristallisation du MCP (2b) et comprenant l'injection dans le MCP (2) du solvant diphasique, à l'état liquide (5), dans lequel le MCP (2) est insoluble, en partie inférieure de la cuve (1) par un premier module d'évacuation et l'évacuation du solvant, à l'état gazeux (3), en partie supérieure de la cuve (1) par un premier module d'évacuation.

14. Procédé selon la revendication précédente comprenant la condensation du solvant gazeux (3) évacué de la cuve (1) par un échangeur thermique externe (9) transférant l'énergie thermique du solvant gazeux (3) à un fluide caloporteur issu d'un réseau externe de circulation d'un fluide caloporteur.

15. Procédé selon l'une quelconque des deux revendications précédentes comprenant l'évaporation du solvant liquide (5) par un échangeur thermique externe (9) pour former une vapeur surchauffée (4) de solvant destinée à être injectée dans la cuve (1), l'échangeur thermique externe (9) transfert l'énergie thermique d'un fluide caloporteur issu d'un réseau externe de circulation d'un fluide caloporteur.

## Patentansprüche

1. System zur Wärmespeicherung (WSS) mittels Phasenwechselmaterial (PCM) (2), umfassend:
- einen Behälter (1), der dazu bestimmt ist, ein PCM (2) zu enthalten,
- ein Umwälzsystem, das zum Umwälzen eines Lösungsmittels im Behälter (1) in direktem Kontakt mit dem PCM (2) bestimmt ist,
**dadurch gekennzeichnet, dass** es eine Vorrichtung zur Steuerung der Kristallisation des PCM (2) umfasst, welche umfasst:
- ein erstes Einspritzmodul, das so ausgelegt ist, dass es am unteren Teil des Behälters (1) ein zweiphasiges, flüssig/gasförmiges Lösungsmittel, in dem das PCM (2) nicht löslich ist, im flüssigen Zustand (5) in das PCM (2) einspritzt,
- ein erstes Auslassmodul, das so ausgelegt ist, dass es das zweiphasige Lösungsmittel im gasförmigen Zustand (3) am oberen Teil des Behälters (1), der dem unteren Teil gegenüberliegt, auslässt,
- ein zweites Einspritzmodul, das so ausgelegt ist, dass es am unteren Teil des Behälters das Lösungsmittel im gasförmigen Zustand in direktem Kontakt mit dem PCM (2) einspritzt,
- ein zweites Auslassmodul (31), das so ausgelegt ist, dass es das zweiphasige Lösungsmittel im flüssigen Zustand (5) am oberen Teil des Behälters (1) auslässt, und
- einen externen Wärmetauscher (9), der dazu bestimmt ist, die Wärmeenergie zwischen dem Lösungsmittel und einem Wärmeträgerfluid, das aus einem externen Umwälznetz des Wärmeträgerfluids (20, 21) stammt, zu übertragen, und der so ausgelegt ist, dass er abwechselnd das vom ersten Auslassmodul aus dem Behälter (1) ausgelassene gasförmige Lösungsmittel kondensiert, oder das Lösungsmittel im flüssigen Zustand, für dessen Einspritzung im Zustand von überhitztem Dampf durch das zweite Einspritzmodul, verdampft.

2. WSS nach Anspruch 1, das mindestens ein PCM umfasst, das der Unterkühlung unterliegt.

3. WSS nach dem vorstehenden Anspruch, wobei das PCM eine Unterkühlung aufweist, die der Differenz zwischen seiner theoretischen Kristallisationstemperatur und seiner tatsächlichen Kristallisationstemperatur von gleich oder größer als 2 °C entspricht.

4. WSS nach einem der vorstehenden Ansprüche, das eine Gasatmosphäre (10) umfasst, die aus mindestens einem Inertgas besteht, und ein Modul zum Rückführen der nicht kondensierbaren Teile (12) der Gasatmosphäre (10) vom externen Wärmetauscher (9) zum Behälter (1).

5. WSS nach einem der vorstehenden Ansprüche, wobei das erste Einspritzmodul eine Einspritzpumpe (11) umfasst, die dazu bestimmt ist, das Einspritzen des Lösungsmittels im flüssigen Zustand (5) am unteren Teil des Behälters (1) zu ermöglichen, und/oder das zweite Einspritzmodul eine Einspritzpumpe oder eine Blasvorrichtung umfasst, die dazu bestimmt ist, das Einspritzen des Lösungsmittels im Zustand von überhitztem Dampf (4) am oberen Teil des Behälters (1) zu ermöglichen.

6. WSS nach einem der vorstehenden Ansprüche, wobei das erste Auslassmodul ein Auslassventil (7) umfasst, das dazu bestimmt ist, das Auslassen des Lösungsmittels im gasförmigen Zustand (3) am oberen Teil des Behälters (1) zu ermöglichen.

7. WSS nach einem der vorstehenden Ansprüche, wobei das zweite Auslassmodul (31) eine am oberen Teil des Behälters (1) angebrachte Überlauftülle umfasst, die dazu bestimmt ist, das Auslassen des Lösungsmittels im flüssigen Zustand (5) am oberen Teil des Behälters (1) zu ermöglichen.

8. WSS nach einem der Ansprüche 1 bis 6, wobei das zweite Auslassmodul (31) eine Entnahmevorrichtung umfasst, die am oberen Teil des Behälters (1) angebracht ist.

9. WSS nach einem der vorstehenden Ansprüche, das einen Tank (8) umfasst, der so ausgelegt ist, dass er das Lösungsmittel im flüssigen Zustand (5) aufnimmt.

10. WSS nach einem der vorstehenden Ansprüche, das ein PCM (2) umfasst, das aus alkoholischen Zuckern, von alkoholischen Zuckern abgeleiteten Produkten und Salzhydraten ausgewählt ist, vorzugsweise aus Xylit, Sorbit, Mannit, Erythrit ausgewählt ist.

11. WSS nach einem der vorstehenden Ansprüche, das mindestens ein Lösungsmittel umfasst, ausgewählt aus Ethanol, Methanol, Aceton.

12. Verfahren zur Steuerung der Kristallisation eines in einem Behälter (1) enthaltenen PCM (2) eines WSS nach einem der vorstehenden Ansprüche, **dadurch gekennzeichnet, dass** es das Einspritzen eines zweiphasigen Lösungsmittels, in dem das PCM (2) nicht löslich ist, im flüssigen Zustand am unteren Teil des Behälters (1) in das im Behälter enthaltene PCM, und das Auslassen des Lösungsmittels im gasförmigen Zustand am oberen Teil des Behälters (1) umfasst.

13. Verfahren zur Speicherung von Wärmeenergie mittels eines WSS nach einem der Ansprüche 1 bis 11, **dadurch gekennzeichnet, dass** es umfasst:
- eine Ladephase, bei der ein Wärmeträgerfluid seine Wärme an ein in einem Behälter (1) enthaltenes PCM (2a) abgibt, was zum Schmelzen des PCM (2a) führt, und die das Einspritzen des zweiphasigen Lösungsmittels, in dem das PCM (2) nicht löslich ist, im Zustand von überhitztem Dampf (4) durch ein zweites Einspritzmodul am unteren Teil des Behälters direkt in Kontakt mit dem PCM, und das Auslassen des flüssigen Lösungsmittels (5) durch ein zweites Auslassmodul am oberen Teil des Behälters (1) umfasst,
- eine Entladephase, bei der das PCM (2b) seine Wärme an das Wärmeträgerfluid abgibt, was zur Kristallisation des PCM (2b) führt, und die das Einspritzen des zweiphasigen Lösungsmittels, in dem das PCM (2) nicht löslich ist, im flüssigen Zustand (5) durch ein erstes Auslassmodul am unteren Teil des Behälters (1) in das PCM (2), und das Auslassen des Lösungsmittels im gasförmigen Zustand (3) durch ein erstes Auslassmodul am oberen Teil des Behälters (1) umfasst.

14. Verfahren nach dem vorstehenden Anspruch, das das Kondensieren des aus dem Behälter (1) ausgelassenen gasförmigen Lösungsmittels (3) durch einen externen Wärmetauscher (9) umfasst, der die Wärmeenergie des gasförmigen Lösungsmittels (3) an ein Wärmeträgerfluid übertragt, das aus einem externen Umwälznetz eines Wärmeträgerfluids stammt.

15. Verfahren nach einem der zwei vorstehenden Ansprüche, das das Verdampfen des flüssigen Lösungsmittels (5) durch einen externen Wärmetauscher (9) umfasst, um einen überhitzten Lösungsmitteldampf (4) zu bilden, der dazu bestimmt ist, in den Behälter (1) eingespritzt zu werden, wobei der externe Wärmetauscher (9) die Wärmeenergie von einem Wärmeträgerfluid überträgt, das aus einem externen Umwälznetz eines Wärmeträgerfluids stammt.

## Claims

1. Thermal Storage System (TSS) by Phase Change Material (PCM) (2) comprising:
- a tank (1) intended to contain a PCM (2),
- a circulation system intended for the circulation in the tank (1) of a solvent in direct contact with the PCM (2),
**characterised in that** it comprises a device for controlling the crystallisation of the PCM (2) comprising:
- a first injection module configured to inject, in the lower portion of the tank (1) in the PCM (2), a two-phase solvent, liquid/gas to the liquid state (5), wherein the PCM (2) is insoluble,
- a first discharge module configured to discharge the two-phase solvent in the gaseous state (3) in the upper portion of the tank (1), opposite the lower portion,
- a second injection module configured to inject, in the lower portion of the tank, the solvent to the gaseous state in direct contact with the PCM (2),
- a second discharge module (31) configured to discharge the two-phase solvent in the liquid state (5) in the upper portion of the tank (1), and
- an external heat exchanger (9) intended to transfer the thermal energy between the solvent and a heat-transfer fluid coming from an external network for circulating the heat-transfer fluid (20, 21) and configured to alternatively condense the gaseous solvent discharged from the tank (1) by the first discharge module or discharge the solvent in the liquid state for the injection thereof in the vapour state overheated by the second injection module.

2. TSS according to claim 1 comprising at least one PCM subject to undercooling.

3. TSS according to the preceding claim, wherein the PCM has an undercooling corresponding to the difference between the theoretical crystallisation temperature thereof and the actual crystallisation temperature equal to or greater than 2°C.

4. TSS according to any one of the preceding claims comprising a vapour phase (10) composed of at least one inert gas, and a module for returning incondensable gases (12) of the vapour phase (10) from the external heat exchanger (9) to the tank (1).

5. TSS according to any one of the preceding claims, wherein the first injection module comprises an injection pump (11) intended to allow the injection of the solvent in the liquid state (5) in the lower portion of the tank (1) and/or the second injection module comprises an injection pump or a blowing device intended to allow the injection of the solvent in the vapour state overheated (4) in the upper portion of the tank (1).

6. TSS according to any one of the preceding claims, wherein the first discharge module comprises a discharge valve (7) intended to allow the discharge of the solvent in the gaseous state (3) in the upper portion of the tank (1).

7. TSS according to any one of the preceding claims, wherein the second discharge module (31) comprises an overflow tray arranged in the upper portion of the tank (1) intended to allow the discharge of the solvent in the liquid state (5) in the upper portion of the tank (1).

8. TSS according to any one of claims 1 to 6, wherein the second discharge module (31) comprises a sampling device arranged in the upper portion of the tank (1).

9. TSS according to any one of the preceding claims comprising a reservoir (8) configured to receive the solvent in the liquid state (5).

10. TSS according to any one of the preceding claims comprising a PCM (2) selected from among alcohol sugars, derivative products of alcohol sugars and salt hydrates, preferably selected from among xylitol, sorbitol, mannitol, erythritol.

11. TSS according to any one of the preceding claims comprising at least one solvent selected from among ethanol, methanol, acetone.

12. Method for controlling the crystallisation of a PCM (2) contained in a tank (1) of a TSS according to any one of the preceding claims, **characterised in that** it comprises the injection in the PCM contained in the tank of a two-phase solvent, in the liquid state, wherein the PCM (2) is insoluble, in the lower portion of the tank (1) and the discharge of the solvent in the gaseous state in the upper portion of the tank (1).

13. Method for storing thermal energy by a TSS according to any one of claims 1 to 11, **characterised in that** it comprises:
- a charge phase during which a heat-transfer fluid transfers the heat thereof to a PCM (2a) contained in a tank (1) leading to the fusion of the PCM (2a) and comprising the injection of the two-phase solvent, in the overheated vapour state (4), wherein the PCM (2) is insoluble, in the lower portion of the tank directly in contact with the PCM by a second injection module, and the discharge of the liquid solvent (5), in the upper portion of the tank (1), by a second discharge module,
- a discharge phase during which the PCM (2b) transfers the heat thereof to a heat-transfer fluid leading to the crystallisation of the PCM (2b) and comprising the injection in the PCM (2) of the two-phase solvent, in the liquid state (5), wherein the PCM (2) is insoluble, in the lower portion of the tank (1) by a first discharge module and the discharge of the solvent, in the gaseous state (3), in the upper portion of the tank (1), by a first discharge module.

14. Method according to the preceding claim comprising the condensation of the gaseous solvent (3) discharged from the tank (1) by an external heat exchanger (9) transferring the thermal energy from the gaseous solvent (3) to a heat-transfer fluid coming from an external network for circulation of a heat-transfer fluid.

15. Method according to any one of the two preceding claims comprising the evaporation of the liquid solvent (5) by an external heat exchanger (9) to form an overheated solvent vapour (4) intended to be injected in the tank (1), the external heat exchanger (9) transfers the thermal energy of a heat-transfer fluid coming from an external network for circulating a heat-transfer fluid.
